# EUROPÄISCHE PATENTSCHRIFT

(11) **EP 3 736 742 B1**
(45) Veröffentlichungstag und Bekanntmachung des Hinweises auf die Patenterteilung: **29.01.2025**
(21) Anmeldenummer: 20168788.6
(22) Anmeldetag: 08.04.2020
(51) Int. Cl.: G06N 3/0464, G06N 3/0495, G06N 3/09

(54) **MASCHINELLES LERNSYSTEM, SOWIE EIN VERFAHREN, EIN COMPUTERPROGRAMM UND EINE VORRICHTUNG ZUM ERSTELLEN DES MASCHINELLEN LERNSYSTEMS**
MACHINE LEARNING SYSTEM, A METHOD, A COMPUTER PROGRAM AND A DEVICE FOR CREATING THE MACHINE LEARNING SYSTEM
SYSTÈME D'APPRENTISSAGE AUTOMATIQUE, PROCÉDÉ, PROGRAMME INFORMATIQUE ET DISPOSITIF DE CRÉATION DU SYSTÈME D'APPRENTISSAGE AUTOMATIQUE

(30) Priorität: 08.05.2019 DE 102019206621
(43) Veröffentlichungstag der Anmeldung: 11.11.2020
(73) Patentinhaber: Robert Bosch GmbH, 70442 Stuttgart (DE)
(72) Erfinder: Pfeil, Thomas, 71272 Renningen (DE)

(56) Entgegenhaltungen:
- LEE HYUNHOON ET AL: "Fixed-Point Quantization of 3D Convolutional Neural Networks for Energy-Efficient Action Recognition", 2018 INTERNATIONAL SOC DESIGN CONFERENCE (ISOCC), IEEE, 12 November 2018 (2018-11-12), pages 129 - 130, XP033523052, DOI: 10.1109/ISOCC.2018.8649987
- MD ZAHANGIR ALOM ET AL: "Effective Quantization Approaches for Recurrent Neural Networks", ARXIV.ORG, CORNELL UNIVERSITY LIBRARY, 201 OLIN LIBRARY CORNELL UNIVERSITY ITHACA, NY 14853, 7 February 2018 (2018-02-07), XP081219765
- OKAN KOPUKLU ET AL: "Resource Efficient 3D Convolutional Neural Networks", 27 April 2019 (2019-04-27), arXiv.org, pages 1 - 10, XP055732172, Retrieved from the Internet <URL:https://arxiv.org/pdf/1904.02422v2.pdf> [retrieved on 20200921]
- SHUIWANG JI ET AL: "3D Convolutional Neural Networks for Human Action Recognition", IEEE TRANSACTIONS ON PATTERN ANALYSIS AND MACHINE INTELLIGENCE, IEEE COMPUTER SOCIETY, USA, vol. 35, no. 1, 1 January 2013 (2013-01-01), pages 221 - 231, XP011490774, ISSN: 0162-8828, DOI: 10.1109/TPAMI.2012.59
- MATTHIEU COURBARIAUX ET AL: "Binarized Neural Networks: Training Neural Networks with Weights and Activations Constrained to +1 or -1", ARXIV.ORG, 17 March 2016 (2016-03-17), pages 1 - 11, XP055405835, Retrieved from the Internet <URL:https://arxiv.org/pdf/1602.02830.pdf>

## Beschreibung

### Technisches Gebiet

Die Erfindung betrifft ein maschinelles Lernsystem mit quantisierten Parametern. Ferner betrifft die Erfindung ein Verfahren und ein Computerprogramm, sowie eine Vorrichtung zum Erstellen des maschinellen Lernsystems.

### Stand der Technik

Das nicht vorveröffentlichte Dokument DE 10 2017 218 889.8 offenbart ein Künstliches-Intelligenz-Modul, welches dazu ausgebildet ist, eine oder mehrere Eingangsgrößen durch eine interne Verarbeitungskette zu einer oder mehreren Ausgangsgrößen zu verarbeiten. Die interne Verarbeitungskette ist durch einen oder mehrere Parameter festgelegt. Ein Verteilungsmodul ist vorgesehen, welches dazu ausgebildet ist, abhängig von wenigstens einer statistischen Verteilung die Parameter zu ermitteln

Das nicht vorveröffentlichte Dokument DE 10 2018 216 471.1 offenbart ein quantisiertes neuronales Netz.

Es ist möglich, quantisierte neuronale Netze mit extrem starker Quantisierung zu erstellen, wie z.B. gezeigt von Hubara et al. "Quantized neural networks: Training neural networks with low precision weights and activations" The Journal of Machine Learning Research, 2017, 18. Jg., Nr. 1, S. 6869-6898.

Rekurrente neuronale Netze (RNN, engl. recurrent neural networks) haben den Vorteil, dass diese auch Informationen, die in einer zeitlichen Dimension von LEE HYUNHOON ET AL: "Fixed-Point Quantization of 3D Convolutional Neural Networks for Energy Efficient Action Recognition", 2018 INTERNATIONAL SOC DESIGN CONFERENCE (ISOCC), IEEE, 12. November 2018 schlagen eine Vereinfachung von 3D Convolutional Neural Networks (CNNs) zur Reduzierung des Energieverbrauchs der Handlungserkennung vor. Anstatt Gleitkomma-Gewichte und Eingabewerte zu verwenden, was zu einer großen Menge an Verarbeitungsenergie führt, führen die Autoren eine systematische Methode ein, um alle Werte von 3D-CNNs zu quantisieren, ohne die Erkennungsgenauigkeit zu beeinträchtigen.

MD ZAHANGIR ALOM ET AL: "Effective Quantization Approaches for Recurrent Neural Networks", ARXIV.ORG, CORNELL UNIVERSITY LIBRARY, 201 OLIN LIBRARY CORNELL UNIVERSITY ITHACA, NY 14853, schlagen einen effektiven Quantisierungsansatz für Recurrent Neural Networks vor (RNN)-Techniken einschließlich Long Short Term Memory (LSTM), Gated Recurrent Units (GRU) und Convolutional Long Short Term Memory (ConvLSTM) vor. Die Autoren haben verschiedene Quantisierungsmethoden implementiert, darunter Binary Connect {-1, 1}, Ternary Connect {-1, 0, 1}und Quaternary Connect {-1, - 0.5, 0.5, 1}.

Okan Kopuklu ET AL: "Resource Efficient 3D Convolutional Neural Networks", 27. April 2019 (2019-04-27), Seiten 1-10, arXiv.org: URL:https://arxiv.org/pdf/1904.02422v2.pdf haben verschiedene bekannte ressourceneffiziente 2D CNNs auf 3D CNNs umgestellt.

SHUIWANG JI ET AL: "3D Convolutional Neural Networks for Human Action Recognition", IEEE TRANSACTIONS ON PATTERN ANALYSIS AND MACHINE INTELLIGENCE, IEEE COMPUTER SOCIETY, USA, Bd. 35, Nr. 1, 1. Januar 2013 offenbaren eine Entwicklung eines neuartigen 3D-CNN-Modells zur Handlungserkennung. Dieses Modell extrahiert Merkmale sowohl aus der räumlichen als auch aus der zeitlichen Dimension, indem es 3D-Faltungen durchführt und so die Bewegungsinformationen erfasst, die in mehreren benachbarten Frames codiert sind.

Sensordaten enthalten sind, verarbeiten können. Nachteilig von RNNs ist jedoch, dass diese nicht stark quantisiert werden können.

Es ist aber wünschenswert, Parameter der RNNs zu quantisierten, um RNNs performanter auf einer mobilen Recheneinheit betreiben zu können.

Gemäß dem unabhängigen Anspruch 1 wird vorgeschlagen, anstatt den RNNs, neuronale Netze mit zeitlichen Faltungen zu verwenden. Dies hat den Vorteil, dass diese neuronalen Netze trotz einer rechenaufwendigen Faltung überraschenderweise bei einer Quantisierung deren Parameter, energiesparsamer sein können, als vergleichbare RNNs unter Beibehalten des oben genannten Vorteils von RNNs.

### Offenbarung der Erfindung

In einem ersten Aspekt wird ein besonders speicher- und energieeffizientes maschinelles Lernsystem zur Verarbeitung von Zeit-serien/-reihen vorgeschlagen.

Das maschinelle Lernsystem mit den Merkmalen gemäß Anspruch 1, umfasst zumindest einen Filter, wobei zumindest Filterkoeffizienten des Filters quantisiert sind. Denkbar ist auch, dass neben den Filterkoeffizienten weitere Parameter des maschinellen Lernsystems quantisiert sind. Zusätzlich könnten zumindest Aktivierungen quantisiert sein. Die Quantisierung der Aktivierungen kann sinnvoll sein, wenn eine Anzahl der Aktivierungen eine Anzahl der Parameter (z.B. Gewichte) des maschinellen Lernsystems überschreitet.

Das maschinelle Lernsystem ist eingerichtet, abhängig von einer Eingangsgröße unter Verwendung des Filters eine Ausgangsgröße zu ermitteln. Die Eingangsgröße umfasst eine zeitliche Abfolge von Bildern. Alternativ kann eine Mehrzahl von zeitlich nacheinander erfassten Größen, wie z.B. eindimensionale Sensordaten, verwendet werden. Das maschinelle Lernsystem ist ferner eingerichtet, den Filter auf eine Abfolge von Pixel, die alle an jeweils gleichen Koordinaten der Bilder oder an jeweils gleichen Koordinaten von Zwischenergebnissen des maschinellen Lernsystems, insbesondere zwischenverarbeiten Bildern, liegen, anzuwenden. Für den Fall, dass anstatt der Bilder erfasste Größen verwendet werden, wird der Filter auf Datenpunkte der erfassten Größen oder Zwischenergebnisse, die jeweils an der gleichen Position liegen, angewendet. Die Zwischenergebnisse sind bspw. Aktivierungen von Schichten des neuronalen Netzes.

Denkbar ist auch, dass die Filterkoeffizienten und vorzugsweise die weiteren Parameter des maschinellen Lernsystems, jeweils einen Wert aus einem vorgebbaren quantisierten Wertebereich aufweisen. Der vorgebbare quantisierte Wertebereich kann durch eine vorgegebene Anzahl der Quantisierungsstufen und/oder durch eine vorgebbare Anzahl von Bit definiert sein.

Unter quantisiert kann verstanden werden, dass die Filterkoeffizienten nur quantisierte Werte in der Dezimaldarstellung, vorzugsweise quantisierte Werte in einem floating-, fix-point oder integer-Zahlenformat, annehmen können. Die Filterkoeffizienten sind mit höchstens Bit quantisiert. Unter quantisiert kann ferner verstanden werden, dass die Filterkoeffizienten auf eine nächstliegende Quantisierungsstufe einer Mehrzahl von vorgebbaren Quantisierungsstufen auf- oder abgerundet wurden. Die Filterkoeffizienten weisen dann jeweils einen Wert der Mehrzahl der Quantisierungsstufen auf, wobei diese Werte in einem Speicher hinterlegt sind. Vorteilhaft hieran ist, dass die Quantisierungsstufen speichereffizient hinterlegt werden können. Die Anzahl der Quantisierungsstufen ist abhängig von der Anzahl der verwendeten Bit zum Quantisieren. Alternativ kann ein angelerntes maschinelle Lernsystem quantisiert werden, bei welchem dessen Parameter bei voller Auflösung beim Anlernen angepasst wurden und daraufhin quantisiert wurden.

Der vorgebbare quantisierte Wertebereich kann auch eine Liste sein. Denkbar ist, dass die Filterkoeffizienten eine reduzierte Auflösung aufweisen, wobei die Auflösung mittels einer Quantisierung reduziert wurde.

Die Auflösung kann charakterisieren, mittels wie vielen unterschiedlichen möglichen, insbesondere quantisierten, Werten jeweils die Parameter und/oder die Zwischenergebnisse dargestellt werden.

Unter Anwenden des Filters kann verstanden werden, dass der Filter mit den Datenpunkten oder den Ausschnitten, die alle die gleichen Koordinaten haben, math. gefaltet wird.

Das maschinelle Lernsystem gemäß dem ersten Aspekt hat den Vorteil, dass durch die Quantisierung weniger Bit zum Speichern der Filterkoeffizienten benötigt werden, folglich wird weniger Speicherplatz benötigt. Dadurch können kleinerer Speicher verwendet werden, die eine kompaktere Bauweise des maschinellen Lernsystems in Hardware erlauben. Da der Energieverbrauch für das Speichern und Lesen der Parameter und Aktivierungen proportional zu der Anzahl der Bit und für Multiplikationen mindestens quadratisch zu der Auflösung (Anzahl der Bit) der Parameter und Aktivierungen ist, ist eine Reduktion der Anzahl der Bit, insbesondere durch eine Quantisierung, besonders computerressourceneffizient. Selbst wenn das maschinelle Lernsystem in Software implementiert ist, kommen diese Vorteile zum Tragen, da weniger Speicher benötigt wird.

Da neben hochauflösenden Eingangsgrößen, wie z.B. Bilder, die Filter den größten Einfluss auf den Energieverbrauch haben, ist eine Quantisierung der Filter vorteilhaft. Denn durch den daraus resultierenden computerressourcenschonenden Umgang, wird das maschinelle Lernsystem sowohl für stationäre (z. B. in Rechenzentren) als auch für mobile Anwendungen (z. B. mobile Datenverarbeitungsanlangen oder eingebettete Systeme) verwendbar. Derartig quantisierte maschinelle Lernsysteme eignen sich besonders dazu, gemessene Daten nahe am Sensor bzw. im Sensor selbst zu verarbeiten, womit gemessene Daten komprimiert und bandbreiteneffizienter übertragen werden können.

Die Bilder können Lidar-, Radar-, Ultraschall- oder Kamera-Bilder sein.

Es wird vorgeschlagen, dass die Eingangsgröße ein Tensor ist, der die Mehrzahl der erfassten Größen oder die Abfolge der Bilder umfasst. Die erfassten Größen oder die Bilder sind entlang einer ersten Dimension des Tensors angeordnet. Der Filter wird dann zumindest entlang der ersten Dimension angewendet. Die Anwendung des Filters entlang der ersten Dimension, welche die zeitliche Abfolge charakterisiert, wird deshalb als eine zeitliche Faltung bezeichnet.

Der Vorteil dieses maschinellen Lernsystems ist, dass Informationen, die entlang der Zeitachse enthalten sind, durch die zeitliche Filterung mitverarbeitet werden. Dadurch besitzt dieses maschinelle Lernsystem rekurrente Eigenschaften. Jedoch werden keine rekurrenten Verknüpfungen benötigt, die typischerweise nicht stark quantisiert werden können. Dennoch wird durch den quantisierten Filter eine effizientere Verarbeitung der Abfolge der Eingangsgrößen als mit RNN erreicht.

Weiterhin wird vorgeschlagen, dass der Filter mehrdimensional ist und das maschinelle Lernsystem ferner eingerichtet ist, den Filter auf eine Abfolge von Ausschnitten, die alle an jeweils gleichen Koordinaten der Bilder oder an jeweils gleichen Koordinaten der Zwischenergebnisse liegen, anzuwenden.

Ein Ausschnitt umfasst eine Mehrzahl von Datenpunkten oder Pixel, die an den jeweiligen Koordinaten der erfassten Größen oder Bilder oder Zwischenergebnissen liegen. Die Ausschnitte können ein-/mehr-dimensional sein, entsprechend muss eine Anzahl der Dimensionen des Filters gewählt werden. Es sei angemerkt, dass dadurch mehrere Pixel oder Datenpunkte, die alle entlang der, insbesondere parallel zur, ersten Dimension liegen, zusätzlich bei der Filterung entlang der ersten Dimension berücksichtigt werden.

Beispielsweise kann der Ausschnitt eine Linie oder Rechteck sein. Unterschiedliche Ausrichtung der Ausschnitte innerhalb der Bilder sind denkbar, z.B. vertikal oder horizontal oder diagonal.

Weiterhin wird vorgeschlagen, dass das maschinelle Lernsystem ferner eingerichtet ist, zusätzlich den Filter auf eine Abfolge von weiteren Ausschnitten, die jeweils an unterschiedlichen Koordinaten innerhalb der Bilder oder die jeweils an unterschiedlichen Koordinaten innerhalb der Zwischenergebnissen liegen, anzuwenden.

Der Vorteil hierbei ist, dass mittels des zusätzlichen Anwendens des Filters jeweils entlang der erfassten Größen zusätzliche Informationen in die Ausgangsgröße einfließen. D.h. der Filter wird auf weitere Dimensionen des Tensors angewendet. Dies kann als eine zeitliche und räumliche Faltung bezeichnet werden.

Weiterhin wird vorgeschlagen, dass neben den Filterkoeffizienten auch Zwischenergebnisse, insbesondere Aktivierungen, des maschinellen Lernsystems quantisiert sind.

Denkbar ist ferner, dass Zwischenergebnisse jeweils einen Wert aus dem vorgebbaren quantisierten Wertebereich oder einem weiteren vorgebbaren quantisierten Wertebereich aufweisen.

Weiterhin wird vorgeschlagen, dass die Filterkoeffizienten und/oder die Zwischenergebnisse binär oder ternär sind. Darunter wird verstanden, dass die jeweiligen Filterkoeffizienten und/oder die Zwischenergebnisse höchstens 2 oder 3 unterschiedliche Werte annehmen können. Vorteilhafterweise werden diese unterschiedlichen Werte mittels höchstens eines oder zwei Bit dargestellt. Idealerweise durch ein Bit, da dann ein binäres neuronales Netz vorliegt, die besonders rechen- und speichereffizient sind.

Der Filter lässt einzelne Datenpunkte beim Filtern aus, insbesondere entlang der zeitlichen Dimension. Dies hat den Vorteil, dass mittels weniger Filterkoeffizienten ein größeres Sichtfeld des Filters erreicht und damit weiter in die Vergangenheit geschaut werden kann.

Weiterhin wird vorgeschlagen, dass das maschinelle Lernsystem eine Verwerfungsoperation (engl. pooling) umfasst, die unmittelbar nach dem Filter angeordnet ist.

Unter einer Verwerfungsoperation wird verstanden, dass einzelne gefilterte Datenpunkte, bzw. gefilterte Pixel vernachlässigt, insbesondere verworfen, werden. Bevorzugt wird ein lokales Verwerfen (engl. local pooling) verwendet, bei welchem Datenpunkte innerhalb eines Clusters vernachlässigt werden, deren Werte nahe bei null liegen. Alternativ kann ein mittleres Verwerfen (engl. average pooling) verwendet werden.

Weiterhin wird vorgeschlagen, dass die Bilder oder erfassten Größen nach einer vorgebbaren Reihenfolge hintereinander, insbesondere abhängig von dem jeweiligen erfassten Zeitpunkt des Bildes oder der erfassen Größe, angeordnet sind. Vorzugsweise erfolgt die Anordnung nach einem Zeitpunkt des Erfassens auf-/oder absteigend.

In einem zweiten Aspekt der Erfindung wird ein computerimplementiertes Verfahren zum Betreiben des maschinellen Lernsystems des ersten Aspektes der Erfindung vorgeschlagen. Das Verfahren umfasst die Schritte:
Gruppieren der Mehrzahl der erfassten Größen zu der Eingangsgröße des maschinellen Lernsystems. Gefolgt von einem Ermitteln der Ausgangsgröße unter Verwendung des Filters abhängig von der Eingangsgröße. Hierbei wird der Filter des maschinellen Lernsystems verwendet, und insbesondere eine zeitliche Filterung der Eingangsgröße oder des Zwischenergebnisses ausgeführt.

Für den zweiten Aspekt der Erfindung wird vorgeschlagen, dass die Bilder zu jeweils einem unmittelbar nachfolgenden Zeitpunkt nacheinander erfasst werden. Dann, wenn die Ausgangsgröße ermittelt wurde, wird ein neues, erfasstes Bild zu der Eingangsgröße hinzugefügt und eines der enthaltenen Bilder, insbesondere das zeitlich am längsten enthaltene Bild, wird aus der Eingangsgröße entfernt. Bevorzugt werden die Bildern der Eingangsgröße um eine Position entlang der ersten Dimension des Tensors verschoben, wobei das neue, erfasste Bild an die frei gewordene Stelle hinzugefügt wird und das älteste, erfasste Bild der Eingangsgröße aus dem Tensor entfernt wird.

Weiterhin wird vorgeschlagen, dass die Größen, insbesondere Bilder, jeweils einem Zeitpunkt einer Abfolge von Zeitpunkten zugeordnet sind, an welchem die jeweilige Größe erfasst wurde, wobei zu jedem Zeitpunkt eine neue Größe erfasst wird und die neue, erfasste Größe neben der zum unmittelbar vorherigen Zeitpunkt erfassten Größe zu der Eingangsgröße hinzugefügt wird und die erfasste Größe, die dem längsten vergangenen Zeitpunkt zugeordnet ist, aus der Eingangsgröße entfernt wird.

In einem weiteren Aspekt der Erfindung wird ein Verfahren zum Anlernen des maschinellen Lernsystems des ersten Aspektes vorgeschlagen. Das Anlernen umfasst zumindest die Schritte des Bereitstellens von Trainingsdaten. Die Trainingsdaten umfassen zumindest eine Mehrzahl von Bildsequenzen oder Zeitreihen von erfassten Größen. Daraufhin folgt ein Ermitteln jeweils zumindest einer Ausgangsgröße zu jeder der Bildsequenzen oder Zeitreihen. Daraufhin folgt ein Ermitteln einer Kostenfunktion abhängig von den ermittelten Ausgangsgrößen und den Trainingsdaten. Anschließend folgt ein Anpassen von Parametern des maschinellen Lernsystems abhängig von der Kostenfunktion, sodass die Kostenfunktion hinsichtlich eines vorgebbaren Kriteriums optimal wird. Daraufhin folgt ein Quantisieren der Parameter, insbesondere der Filterkoeffizienten.

Vorteilhafterweise wird die Quantisierung von Beginn an verwendet und unter Berücksichtigung dieser das maschinelle Lernsystem angelernt.

In einem weiteren Aspekt kann das maschinelle Lernsystem des ersten Aspektes oder das gemäß dem zweiten Aspekt erzeugt wurde, abhängig von erfassten Sensorgrößen, insbesondere die Bilder, eines Sensors eine Ausgangsgröße ermitteln, die daraufhin zum Ermitteln einer Steuergröße mittels einer Steuereinheit verwendet wird.

Die Steuergröße kann zum Steuern eines Aktors eines technischen Systems verwendet werden. Das technische System kann zum Beispiel eine zumindest teilautonome Maschine, ein zumindest teilautonomes Fahrzeug, ein Roboter, ein Werkzeug, eine Werkmaschine oder ein Flugobjekt wie eine Drohne sein. Die Eingangsgröße kann bspw. abhängig von erfassten Sensordaten ermittelt und dem maschinellen Lernsystem bereitgestellt werden. Die Sensordaten können von einem Sensor, wie z.B. einer Kamera, des technischen Systems erfasst oder alternativ von extern empfangen werden.

In einem weiteren Aspekt wird ein Computerprogramm vorgeschlagen. Das Computerprogramm ist eingerichtet, eines der vorherigen genannten Verfahren des zweiten Aspektes der Erfindung auszuführen. Das Computerprogramm umfasst Anweisungen, die einen Computer veranlassen, eines dieser genannten Verfahren mit all seinen Schritten auszuführen, wenn das Computerprogramm auf dem Computer abläuft. Ferner wird ein maschinenlesbares Speichermodul vorgeschlagen, auf welchem das Computerprogramm gespeichert ist.

Ausführungsbeispiele der oben genannten Aspekte sind in den beiliegenden Zeichnungen dargestellt und in der nachfolgenden Beschreibung näher erläutert. Dabei zeigen:

### Kurze Beschreibung der Zeichnungen

- Fig. 1: eine schematische Darstellung eines Energieverbrauchs aufgetragen über eine Quantisierungsauflösung beispielhaft für zwei unterschiedliche neuronale Netze jeweils zum Verarbeiten von Zeitreihen;
- Fig. 2: eine schematische Darstellung eines tiefen neuronalen Netzes umfassend einen Filter für eine zeitliche Faltung;
- Fig. 3: eine schematische Darstellung der zeitlichen Faltung;
- Fig. 4: eine schematische Darstellung eines Flussdiagramms eines Verfahrens zum Betreiben des neuronalen Netzes umfassend den Filter für die zeitliche Faltung;
- Fig. 5: eine schematische Darstellung einer Verwendung des neuronalen Netzes umfassend den Filter für die zeitliche Faltung für einen Roboter.

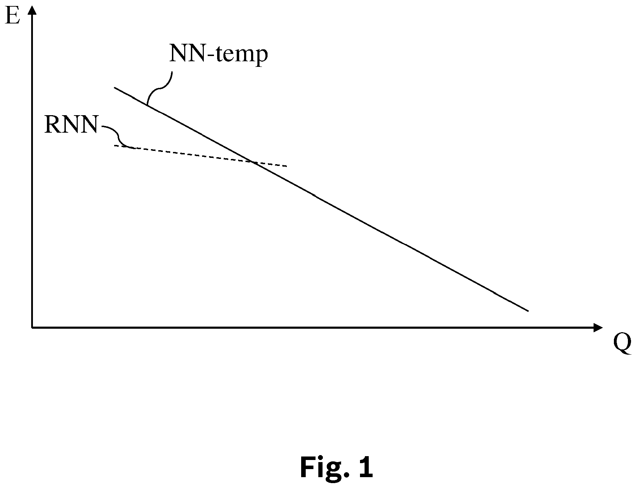

Figur 1 zeigt eine schematische Darstellung eines Diagramms in welchem ein gemessener Energieverbrauch E eines neuronalen Netzes mit zeitlicher Filterung (NN-temp) und ein gemessener Energieverbrauch E eines RNN über eine Quantisierungsauflösung Q aufgetragen ist. Es wurde darauf geachtet, dass die beide Netze ähnliche Ergebnisse auf den gleichen Datensätzen erzielen. Die y-Achse gibt den Energieverbrauch E an, der im Ursprung des Diagramms am niedrigsten ist und mit zunehmendem Abstand zum Ursprung steigt. Auf der x-Achse ist die Quantisierungsauflösung Q aufgetragen, welche in Richtung des Ursprungs des Diagramms zunimmt. Also je näher am Ursprung, desto höher ist die Quantisierungsauflösung, insbesondere die Anzahl der Bit zur Darstellung der Parameter. Im Folgenden betrachten wir den beispielhaften Fall, dass das neuronale Netz mit der zeitlichen Filterung (NN-temp) für eine hohe Quantisierungsauflösung einen deutlichen größeren Energieverbrauch hat als ein vergleichbares RNN bei gleicher Quantisierungsauflösung.

Wird die Auflösung der Parameter beider neuronalen Netze reduziert, sinkt jeweils der Energieverbrauch beider neuronalen Netze. Wird die min. Quantisierungsauflösung des neuronalen Netzes mit zeitlicher Filterung (NN-temp) mit der min. Quantisierungsauflösung des RNN verglichen, fällt auf, dass die min. Quantisierungsauflösung des neuronalen Netzes mit zeitlicher Filterung (NN-temp) deutlich geringer ist, als die min. Quantisierungsauflösung des RNN, unter der Bedingung, dass die Qualität der Ergebnisse der beiden neuronalen Netze im Wesentlichen unverändert bleibt. Dies führt dazu, dass das neuronale Netz mit zeitlicher Filterung (NN-temp) weniger Energie als das RNN verbraucht, aufgrund der starken Quantisierung.

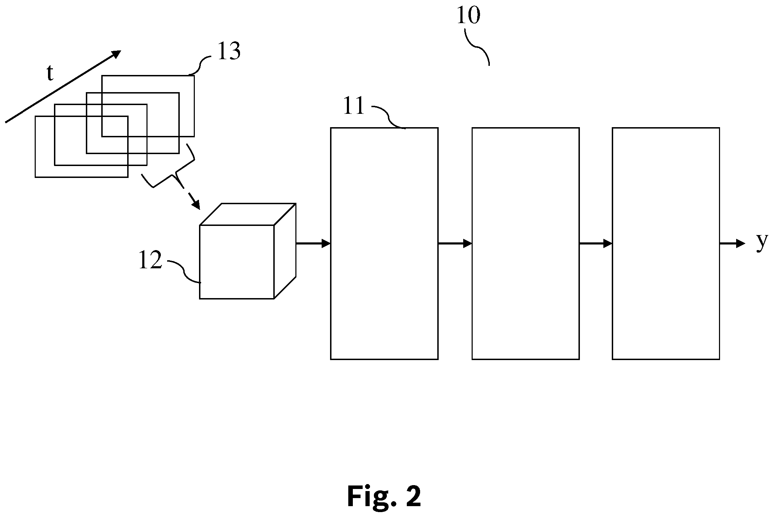

Figur 2 zeigt eine schematische Darstellung eines maschinellen Lernsystems (10), insbesondere eines tiefen neuronalen Netzes. Das maschinelle Lernsystem (10) umfasst eine Mehrzahl von Schichten (11), die in einer vorgebbaren Reihenfolge miteinander verbunden sind. Das maschinelle Lernsystem (10) ermittelt abhängig von einer Eingangsgröße (12) eine Ausgangsgröße y.

Das maschinelle Lernsystem (10) kann als Ausgangsgröße y eine Klassifikation, eine Segmentierung eines der Bilder oder eines der aktuellsten erfassten Bilder, der Eingangsgröße (12) ausgeben. Alternativ kann die Ausgangsgröße y eine Regression sein.

Die Eingangsgröße (12) ist in diesem Ausführungsbeispiel ein Tensor. Der Tensor umfasst eine Mehrzahl von nacheinander erfassten Bilder (13). Die Bilder sind dabei entlang einer ersten Dimension des Tensors angeordnet.

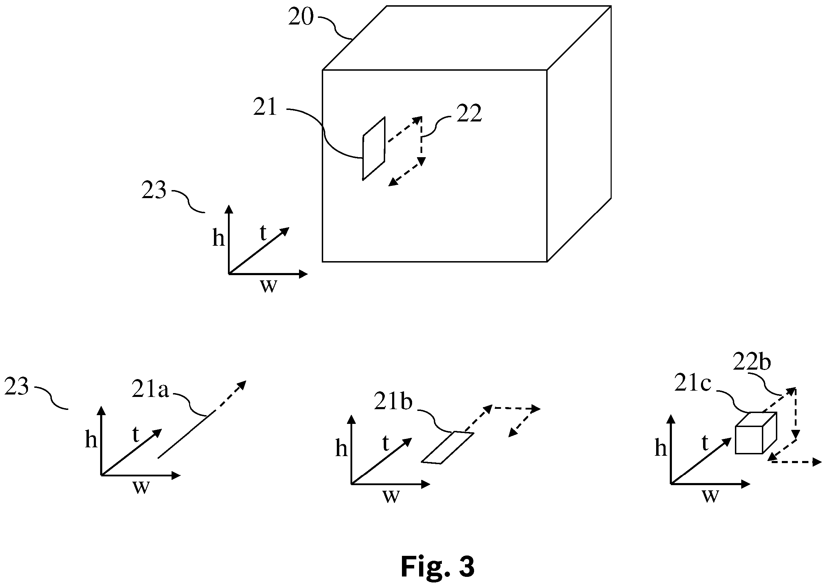

Die Schichten können vollvermaschte Schichten (engl. fully connected) sein, wobei mindestens eine der Schichten eingerichtet ist, eine zeitliche Filterung durchzuführen. Beim Propagieren der Eingangsgröße (12) durch das maschinelle Lernsystem wird die zeitliche Filterung verwendet. Die zeitliche Filterung wird in der nachfolgenden Figur 3 näher erläutert.

Figur 3 zeigt eine schematische Darstellung der zeitlichen Faltung, in anderen Worten der zeitlichen Filterung.

Der abgebildete Tensor (20) in Figur 3 kann entweder die Eingangsgröße (12) oder eine Zwischengröße des maschinellen Lernsystems (10) sein. Die Zwischengröße ist beispielsweise eine Ausgangsgröße einer der Schichten (11).

Links unterhalb des Tensors (20) ist schematisch ein Koordinatensystem (23) abgebildet. Das Koordinatensystem (23) umfasst beispielhaft drei Dimensionen (h,t,w), entlang welchen sich der Tensor (20) erstreckt. Es sei angemerkt, dass die Bilder (13) entlang der "Zeit"-Dimension t hintereinander in dem Tensor (20) angeordnet sind. Die Dimensionen h und w sind beispielhaft räumlichen Dimensionen in welchen sich die Bilder (13) erstrecken.

Mittels des Filters (21) wird nun der Tensor (20) zeitlich gefiltert. Dies geschieht in dem der Filter entlang der "Zeit"-Dimension t entlang des Tensor (20) eine Filterung durchführt. Ein beispielhafter Verlauf der zeitlichen Faltung, insbesondere der zeitlichen Faltung, des Filters (21) mit dem Tensor (20) ist anhand der gestrichelten Pfeile (22) schematisch dargestellt.

Die zeitliche Filterung kann alternativ mit einem der weiteren Filter (21a, 21b,21c) durchgeführt werden. Die weiteren Filter unterscheiden sich untereinander darin, dass diese unterschiedliche viele Dimensionen aufweisen. Beispielsweise ist der weitere Filter (21c) ein dreidimensionaler Filter. Ein möglicher Verlauf der Faltung des dreidimensionalen Filters (21c) mit dem Tensor (20) ist beispielhaft durch die gestrichelten Pfeile (22b) neben dem dreidimensionalen Filter (21c) abgebildet. Es sei angemerkt, dass eine Filterung des dreidimensionalen Filters (21c) mit dem Tensor (20) sowohl eine zeitliche als auch eine räumliche Filterung darstellt, wenn die Faltung entsprechend der gestrichelten Pfeile (22b) ausgeführt wird.

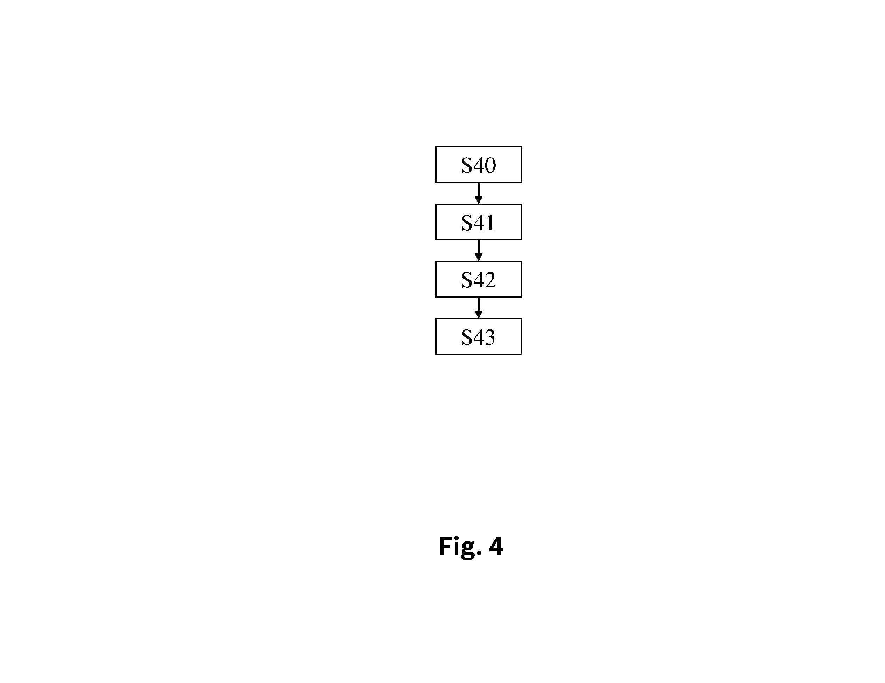

Figur 4 zeigt ein schematisches Flussdiagramm eines Verfahrens zum Betreiben des maschinellen Lernsystems (10).

In einer ersten Ausführungsform beginnt das Verfahren mit Schritt S40. In diesem Schritt wird die Eingangsgröße (12) dem maschinellen Lernsystem (10) bereitgestellt.

Im darauffolgenden Schritt S41 wird die bereitgestellte Eingangsgröße (12) durch das maschinelle Lernsystem (10) propagiert. Beim Propagieren wird entweder die Eingangsgröße (12) oder eine Zwischengröße des maschinellen Lernsystems (10) mittels des Filters (21) zeitlich gefiltert, vergleiche Erläuterungen zur Figur 3. Der Filter weist quantisierte Filterkoeffizienten auf. Vorzugsweise sind alle weiteren Parameter des maschinellen Lernsystems (10) ebenfalls quantisiert.

Im darauffolgenden Schritt S42 wird die Ausgangsgröße des maschinellen Lernsystems ausgegeben.

Daraufhin wird im nachfolgenden Schritt S43 ein neues Bild erfasst und der Eingangsgröße (12) hinzugefügt und ein enthaltenes Bild der Eingangsgröße (12) wird aus der Eingangsgröße (12) entfernt.

Daraufhin wird das Verfahren mit all seinen Schritten S40 bis S43 wiederholt ausgeführt.

In einer weiteren Ausführungsform des Verfahrens zum Betreiben des maschinellen Lernsystems (10) werden die Schritte S40 bis S43 zum Anlernen des maschinellen Lernsystems (10) verwendet. Beim Anlernen wird zusätzlich nach Schritt S43 abhängig von einer Kostenfunktion (engl. loss function) die Parameter des maschinellen Lernsystems optimiert. Die Kostenfunktion charakterisiert hierbei eine Abweichung zwischen den ermittelten Ausgangsgrößen des maschinellen Lernsystems (10) und den zugeordneten Trainingsausgangsgrößen der jeweils verwendeten Eingangsgrößen. Beim Ermitteln der Ausgangsgrößen können bereits quantisierte Parameter verwendet werden. Die Optimierung der Kostenfunktion über die Parameter des maschinellen Lernsystems kann beispielsweise mittels eines Gradiententabstiegsverfahrens, wie zum Beispiel "backpropagation-(through-time)", durchgeführt werden. Dabei wird das Gradientenabstiegsverfahren verwendet, um abhängig von den Parametern die Kostenfunktion zu minimieren oder zu maximieren. Nachdem die Parameter optimiert wurden, werden die Parameter, insbesondere die Filterkoeffizienten, quantisiert. Vorteilhafterweise wird zum Optimieren der Parameter, eine Auflösung der Parameter von zumindest 32 Bit verwendet. Bei der Quantisierung wird dann die Auflösung reduziert, beispielsweise auf 8 Bit bzw. sogar auf 1 Bit.

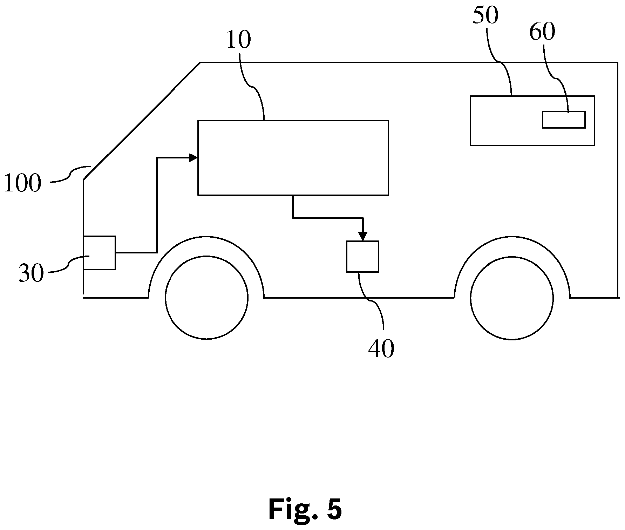

In einer Weiterentwicklung der ersten Ausführungsform des Verfahrens zum Betreiben des maschinellen Lernsystems (10) kann optional nach Beendigung Schrittes S43 die Ausgangsgröße des maschinellen Lernsystems (10) verwendet werden, um abhängig von dieser Ausgangsgröße ein zumindest teilautonomer Roboter anzusteuern. Der zumindest teilautonome Roboter ist in der nachfolgenden Figur 5 beispielhaft dargestellt.

Figur 5 zeigt eine schematische Darstellung des zumindest teilautonomen Roboters, welcher in einem ersten Ausführungsbeispiel durch ein zumindest teilautonomes Fahrzeug (100) gegeben ist. In einem weiteren Ausführungsbeispiel kann der zumindest teilautonome Roboter ein Service-, Montage- oder stationärer Produktionsroboter, alternativ ein autonomes Flugobjekt, wie eine Drohne, sein.

Das zumindest teilautonome Fahrzeug (100) kann eine Erfassungseinheit (30) umfassen. Die Erfassungseinheit (30) kann zum Beispiel eine Kamera sein, welche eine Umgebung des Fahrzeugs (100) erfasst. Die Erfassungseinheit (30) kann mit einem maschinellen Lernsystem (10) verbunden sein. Das maschinelle Lernsystem (10) ermittelt abhängig von einer bereitgestellten Eingangsgröße, z.B. bereitgestellt von der Erfassungseinheit (30), und in Abhängigkeit einer Mehrzahl von Parametern des maschinellen Lernsystems (10) eine Ausgangsgröße. Die Ausgangsgröße kann an eine Steuerungseinheit (40) weitergeleitet werden.

Die Steuerungseinheit (40) steuert in Abhängigkeit der Ausgangsgröße des maschinellen Lernsystem (10) einen Aktor, vorzugsweise steuert diesen den Aktor derart, dass das Fahrzeug (100) ein kollisionsfreies Manöver ausführt. Im ersten Ausführungsbeispiel kann der Aktor ein Motor oder ein Bremssystem des Fahrzeugs (100) sein.

In einem weiteren Ausführungsbeispiel kann der teilautonome Roboter ein Werkzeug, eine Werkmaschine oder ein Fertigungsroboter sein. Ein Material eines Werkstückes kann mittels des maschinellen Lernsystem (10) klassifiziert werden. Der Aktor kann hierbei z.B. ein Motor, der einen Schleifkopf betreibt, sein.

Ferner umfasst das Fahrzeug (100), insbesondere der teilautonome Roboter, eine Recheneinheit (50) und ein maschinenlesbares Speicherelement (60). Auf dem Speicherelement (60) kann ein Computerprogramm gespeichert sein, welches Befehle umfasst, die beim Ausführen der Befehle auf der Recheneinheit (50) dazu führen, dass mittels der Recheneinheit (50) das maschinelle Lernsystem (10) betrieben wird.

## Patentansprüche

1. Computerimplementiertes, angelerntes maschinelles Lernsystem (10), wobei das maschinelle Lernsystem (10) ein tiefes neuronales Netz mit einer Faltungsschicht ist, umfassend zumindest einen Filter (21),
wobei das maschinelle Lernsystem (10) eingerichtet ist, abhängig von einer Eingangsgröße (12) unter Verwendung des Filters (21) eine Ausgangsgröße zu ermitteln,
wobei die Eingangsgröße (12) eine zeitliche Abfolge von Bildern umfasst, wobei das maschinelle Lernsystem (10) eingerichtet ist, den Filter (21) auf eine Abfolge von Pixeln, die alle an jeweils gleichen Koordinaten der Bilder oder an jeweils gleichen Koordinaten von Zwischenergebnissen des maschinellen Lernsystems (10) liegen, anzuwenden,
**dadurch gekennzeichnet, dass** die Filterkoeffizienten des Filters (21) mit höchstens 8 Bit quantisiert sind und dass die Quantisierungen der Filterkoeffizienten des Filters (21) durch Berücksichtigung dieser beim Anlernen des maschinellen Lernsystems erhalten wurden, und
dass der Filter (21) eingerichtet ist, einzelne Pixel der Bilder oder der Zwischenergebnisse bei der Verwendung des Filters (21) auszulassen.

2. Maschinelles Lernsystem (10) nach Anspruch 1, wobei der Filter (21) mehrdimensional ist, und
wobei das maschinelle Lernsystem (10) eingerichtet ist, den Filter (21) auf eine Abfolge von Ausschnitten, die alle an jeweils gleichen Koordinaten der Bilder oder an jeweils gleichen Koordinaten der Zwischenergebnisse liegen, anzuwenden.

3. Maschinelles Lernsystem (10) nach Anspruch 2, wobei das maschinelle Lernsystem (10) ferner eingerichtet ist, zusätzlich den Filter (21) auf eine Abfolge von weiteren Ausschnitten, die jeweils an unterschiedlichen Koordinaten innerhalb der Bilder oder die jeweils an unterschiedlichen Koordinaten innerhalb der Zwischenergebnissen liegen, anzuwenden.

4. Maschinelles Lernsystem (10) nach Anspruch 1 bis 3, wobei die Filterkoeffizienten und/oder die Zwischenergebnisse binär oder ternär sind.

5. Maschinelles Lernsystem (10) nach einem der vorhergehenden Ansprüche, wobei das maschinelle Lernsystem (10) eine Verwerfungsoperation (engl. pooling) umfasst, die unmittelbar nach dem Filter (21) angeordnet ist.

6. Maschinelles Lernsystem (10) nach einem der vorhergehenden Ansprüche, wobei die Bilder nach einer vorgebbaren Reihenfolge hintereinander angeordnet sind,
wobei der Filter (21) auf eine Abfolge der Pixel oder Ausschnitte, die jeweils an den gleichen Koordinaten liegen, angewendet wird und die Pixel oder Ausschnitte der Abfolge nach der Reihenfolge angeordnet sind.

7. Computerimplementiertes Verfahren zum Betreiben des maschinellen Lernsystems (10) nach einem der vorhergehenden Ansprüche, umfassend die Schritte:
Gruppieren der Abfolge der Bilder zu der Eingangsgröße des maschinellen Lernsystems (10);
Ermitteln der Ausgangsgröße unter Verwendung des Filters (21) abhängig von der Eingangsgröße, wobei der Filter (21) auf eine Abfolge von Pixeln, die alle an jeweils gleichen Koordinaten der Bilder, oder von Datenpunkten, die alle an jeweils gleichen Koordinaten von Zwischenergebnissen, liegen, angewendet wird.

8. Verfahren nach Anspruch 7, wobei die Bilder zu jeweils einem unmittelbar nachfolgenden Zeitpunkt nacheinander erfasst werden,
wobei, dann wenn die Ausgangsgröße ermittelt wurde, ein neu erfasstes Bild zu der Eingangsgröße hinzugefügt und eines der enthaltenen Bilder, insbesondere das zeitlich am längsten enthaltene Bild, der Eingangsgröße aus der Eingangsgröße entfernt wird,
wobei daraufhin eine weitere Ausgangsgröße unter Verwendung des Filters abhängig von der Eingangsgröße ermittelt wird.

9. Computerimplementiertes Verfahren zum Anlernen des maschinellen Lernsystems (10) nach einem der Ansprüche 1 bis 6, umfassend die Schritte:
Bereitstellen von Trainingsdaten, die zumindest eine Mehrzahl der Abfolgen von Bilder und zugeordnete Trainingsausgangsgrößen umfasst; Ermitteln jeweils zumindest einer Ausgangsgröße zu jeder der Abfolgen der Bilder;
Ermitteln einer Kostenfunktion abhängig von den ermittelten Ausgangsgrößen und den Trainingsausgangsgrößen;
Anpassen von Parameter des maschinellen Lernsystems (10) abhängig von der Kostenfunktion, sodass die Kostenfunktion hinsichtlich eines vorgebbaren Kriteriums optimal wird; und
Quantisieren der Parameter, insbesondere der Filterkoeffizienten, des maschinellen Lernsystems (10).

10. Computerprogramm, welches Befehle enthält, die eingerichtet sind, beim Ausführen dieser Befehle mittels eines Computers, diesen Computer zu veranlassen, das Verfahren nach eine der Ansprüche 8 bis 9 auszuführen.

11. Maschinenlesbares Speicherelement auf welchem das Computerprogramm nach Anspruch 10 gespeichert ist.

## Claims

1. Computer-implemented, trained machine learning system (10),
wherein the machine learning system (10) is a deep neural network having a convolution layer, comprising at least one filter (21),
wherein the machine learning system (10) is configured to take an input variable (12) as a basis for using the filter (21) to determine an output variable, wherein the input variable (12) comprises a chronological sequence of images,
wherein the machine learning system (10) is configured to apply the filter (21) to a sequence of pixels that are all located at the same coordinates in the images or at the same coordinates in intermediate results of the machine learning system (10), respectively,
**characterized in that** the filter coefficients of the filter (21) are quantized with a maximum of 8 bits and **in that** the quantizations of the filter coefficients of the filter (21) were obtained by taking said filter coefficients into account for training the machine learning system, and
**in that** the filter (21) is configured to omit individual pixels of the images or of the intermediate results when the filter (21) is used.

2. Machine learning system (10) according to Claim 1, wherein the filter (21) is multidimensional, and
wherein the machine learning system (10) is configured to apply the filter (21) to a sequence of sections that are all located at the same coordinates in the images or at the same coordinates in the intermediate results, respectively.

3. Machine learning system (10) according to Claim 2, wherein the machine learning system (10) is further configured to additionally apply the filter (21) to a sequence of further sections that are each located at different coordinates within the images or that are each located at different coordinates within the intermediate results.

4. Machine learning system (10) according to Claims 1 to 3, wherein the filter coefficients and/or the intermediate results are binary or ternary.

5. Machine learning system (10) according to one of the preceding claims, wherein the machine learning system (10) comprises a rejection operation (pooling) that is arranged directly downstream of the filter (21).

6. Machine learning system (10) according to one of the preceding claims, wherein the images are arranged in succession in a predeterminable order, wherein the filter (21) is applied to a sequence of pixels or sections that are each located at the same coordinates, and the pixels or sections of the sequence are arranged in said order.

7. Computer-implemented method for operating the machine learning system (10) according to one of the preceding claims, comprising the steps of:
grouping the sequence of images to produce the input variable of the machine learning system (10);
determining the output variable using the filter (21) on the basis of the input variable, wherein the filter (21) is applied to a sequence of pixels that are all located at the same coordinates in the images, or of data points that are all located at the same coordinates in intermediate results, respectively.

8. Method according to Claim 7, wherein the images are each acquired successively at immediately subsequent times,
wherein, when the output variable has been determined, a newly acquired image is added to the input variable and one of the images included in the input variable, in particular the image included for the longest time, is removed from the input variable,
wherein a further output variable is then determined using the filter on the basis of the input variable.

9. Computer-implemented method for training the machine learning system (10) according to one of Claims 1 to 6, comprising the steps of:
providing training data comprising at least a plurality of the sequences of images and associated training output variables;
determining at least one output variable for each of the sequences of images; determining a cost function on the basis of the determined output variables and the training output variables;
adjusting parameters of the machine learning system (10) on the basis of the cost function, so that the cost function becomes optimal with regard to a predeterminable criterion; and
quantizing the parameters, in particular the filter coefficients, of the machine learning system (10).

10. Computer program comprising instructions that are configured so as, when these instructions are executed by means of a computer, to cause this computer to carry out the method according to either of Claims 8 and 9.

11. Machine-readable storage element on which the computer program according to Claim 10 is stored.

## Revendications

1. Système d'apprentissage automatique (10) entraîné, mis en oeuvre par ordinateur,
le système d'apprentissage automatique (10) étant un réseau neuronal profond avec une couche de convolution, comprenant au moins un filtre (21),
le système d'apprentissage automatique (10) étant conçu pour déterminer une grandeur de sortie en fonction d'une grandeur d'entrée (12) en utilisant le filtre (21),
la grandeur d'entrée (12) comprenant une séquence temporelle d'images,
le système d'apprentissage automatique (10) étant conçu pour appliquer le filtre (21) à une séquence de pixels qui se trouvent tous à des coordonnées respectivement identiques des images ou à des coordonnées respectivement identiques de résultats intermédiaires du système d'apprentissage automatique (10),
**caractérisé en ce que** les coefficients de filtrage du filtre (21) sont quantifiés avec 8 bits au maximum et **en ce que** les quantifications des coefficients de filtrage du filtre (21) ont été obtenues en tenant compte de ceux-ci lors de l'entraînement du système d'apprentissage automatique, et
**en ce que** le filtre (21) est conçu pour omettre des pixels individuels des images ou des résultats intermédiaires lors de l'utilisation du filtre (21).

2. Système d'apprentissage automatique (10) selon la revendication 1, le filtre (21) étant multidimensionnel, et
le système d'apprentissage automatique (10) étant conçu pour appliquer le filtre (21) à une séquence de sections qui se trouvent toutes à des coordonnées respectivement identiques des images ou à des coordonnées respectivement identiques des résultats intermédiaires.

3. Système d'apprentissage automatique (10) selon la revendication 2, le système d'apprentissage automatique (10) étant en outre conçu pour appliquer en plus le filtre (21) à une séquence de sections supplémentaires qui se trouvent respectivement à des coordonnées différentes à l'intérieur des images ou qui se trouvent respectivement à des coordonnées différentes à l'intérieur des résultats intermédiaires.

4. Système d'apprentissage automatique (10) selon les revendications 1 à 3, les coefficients de filtrage et/ou les résultats intermédiaires étant binaires ou ternaires.

5. Système d'apprentissage automatique (10) selon l'une des revendications précédentes, le système d'apprentissage automatique (10) comprenant une opération de sous-échantillonnage (en anglais pooling) qui est située immédiatement après le filtre (21).

6. Système d'apprentissage automatique (10) selon l'une des revendications précédentes, les images étant disposées les unes derrière les autres selon un ordre pouvant être prédéfini,
le filtre (21) étant appliqué à une séquence des pixels ou des sectionss qui se trouvent respectivement aux mêmes coordonnées, et les pixels ou sections de la séquence étant disposés selon l'ordre.

7. Procédé mis en oeuvre par ordinateur pour faire fonctionner le système d'apprentissage automatique (10) selon l'une des revendications précédentes, comprenant les étapes suivantes :
regroupement de la séquence des images en la grandeur d'entrée du système d'apprentissage automatique (10) ;
détermination de la grandeur de sortie en utilisant le filtre (21) en fonction de la grandeur d'entrée, le filtre (21) étant appliqué à une séquence de pixels qui se trouvent tous à des coordonnées respectivement identiques des images, ou de points de données qui se trouvent tous à des coordonnées respectivement identiques de résultats intermédiaires.

8. Procédé selon la revendication 7, les images étant acquises l'une après l'autre à un instant respectif immédiatement suivant,
lorsque la grandeur de sortie a été déterminée, une image nouvellement acquise étant ajoutée à la grandeur d'entrée et l'une des images contenues, notamment l'image contenue depuis le plus longtemps, de la grandeur d'entrée étant retirée de la grandeur d'entrée,
une grandeur de sortie supplémentaire étant ensuite déterminée en fonction de la grandeur d'entrée en utilisant le filtre.

9. Procédé mis en oeuvre par ordinateur pour entraîner le système d'apprentissage automatique (10) selon l'une des revendications 1 à 6, comprenant les étapes suivantes :
fourniture de données d'entraînement, comprenant au moins une pluralité des séquences d'images et des grandeurs de sortie d'entraînement associées ;
détermination respective d'au moins une grandeur de sortie pour chacune des séquences des images ;
détermination d'une fonction de coût en fonction des grandeurs de sortie déterminées et des grandeurs de sortie d'entraînement ;
adaptation de paramètres du système d'apprentissage automatique (10) en fonction de la fonction de coût, de sorte que la fonction de coût devienne optimale par rapport à un critère pouvant être prédéfini ; et
quantification des paramètres, notamment des coefficients de filtrage, du système d'apprentissage automatique (10).

10. Programme informatique, lequel contient des instructions qui sont conçues pour, lors de l'exécution de ces instructions au moyen d'un ordinateur, amener cet ordinateur à mettre en oeuvre le procédé selon l'une des revendications 8 à 9.

11. Élément de stockage lisible par machine, sur lequel est enregistré le programme informatique selon la revendication 10.
